# EUROPEAN PATENT SPECIFICATION

(11) **EP 3 620 079 B1**
(45) Date of publication and mention of the grant of the patent: **02.11.2022**
(21) Application number: 19195292.8
(22) Date of filing: 04.09.2019
(51) Int. Cl.: A47B 31/04, A47B 3/08, A47J 39/00, A47B 31/02

(54) **ROOM SERVICE TABLE**
ZIMMERSERVICETISCH
TABLE DE SERVICE EN CHAMBRE

(30) Priority: 06.09.2018 AU 2018903320
(43) Date of publication of application: 11.03.2020
(73) Proprietor: IHS Global Design Pty Ltd, Melbourne, Victoria 3000 (AU)
(72) Inventor: POLIDOROS, Nicholas, Melbourne, Victoria 3000 (AU)
(74) Representative: Gille Hrabal Partnerschaftsgesellschaft mbB Patentanwälte

(56) References cited:
- CN-A- 107 822 305
- CN-U- 201 870 073
- CN-U- 203 913 965
- JP-U- 3 173 909
- US-A- 4 372 631
- Super User: "T-fold in-room dining trolley - IHS Global Alliance", , 17 August 2018 (2018-08-17), XP055752558, Retrieved from the Internet: URL:https://web.archive.org/web/2018081715 4159/http://ihsglobalalliance.com/ird/t-fo ld [retrieved on 2020-11-20]

## Description

### Field of the invention

The present invention relates to in room dining and a room service table for delivering food to guests in their room.

### Background of the invention

In room dining is a standard service in most hotels, whereby food is ordered by a guest and it is delivered to the guest's room for consumption within the room. The food is typically delivered on a room service table, being a small table on wheels, at which a guest may sit to consume the food.

In many hotels, the food is kept warm by placing a food cover over the plate. However, in more expensive hotels the food is kept warm in a food warmer. The food warmer is a small insulated box that sits on the underlying frame of the room service table. When the food is delivered to the room, the server will set up the table, open the food warmer and remove the food dish, placing it on the table top for consumption. A problem with such an arrangement is that, with a food warmer in position, limited leg room is provided to allow a guest to comfortably sit at the table to eat.

Due to the limited storage space within hotels, it is desirable that the room service table is able to be effectively stored. This may be achieved by providing a table in the form of a drop leaf table, whereby sections of the table top drop down to reduce the width for storage. The underlying frame may also be collapsible to a certain extent. With existing systems, before collapsing the frame, the food warmer must first be removed. The food warmer is then separately stored, taking up additional room.

It is therefore desirable to provide an alternative room service table that at least in part addresses some of the above issues, or provides a useful alternative.

JP 3 173909 U discloses a moveable table with a drawer, wherein the table top can be tilted upwards, designed to be stored nested. CN 201 870 073 U discloses a fixed table with a drawer comprising a heating element.

### Summary of the invention

Accordingly, the present invention provides a room service table according to claim 1.

The top surface of the table top is preferably generally planar. The legs are preferably panels extending the depth of the table top and may have an exterior that is generally planar. The table top and leg may meet at a mitre joint.

The moveable connection between the table top and the opposing leg may be at least in part pivotal. The moveable connection may also be at least in part displaceable forward/rearward and/or up/down. The table top does not pivot about one leg, but between the two opposing legs, the rotation being in a direction perpendicular to an axis extending between the two opposing legs.

There may be a moveable connection on both of the opposing edges, connecting the table top on both edges to a respective leg.

The moveable connection is preferably a lift mechanism in the form of an articulated quadrilateral. Such a mechanism not only tilts the table top upwardly so that one side is higher than the other, but also moves the lower side forwards as the table top tilts. This is achieved by the pivotal connection of four arms of differing lengths, with one arm remaining horizontally orientated and fixed to the leg and an opposing arm fixed to the table top.

A gas strut may be utilised to assist with lifting of the table top to the tilted orientation. Latching means may be provided between the table top and the legs to lock in the lowered orientation.

The drawer is an insulated drawer to act as a food warmer. The drawer includes a heating element to ensure heat within the drawer is maintained.

### Brief description of the drawings

Further aspects of the present invention and further embodiments of the aspects described in the preceding paragraphs will become apparent from the following description, given by way of example and with reference to the accompanying drawings, in which:
FIGURE 1 is a perspective top view of a room service table according to an embodiment of the present invention;
FIGRE 2 is a perspective bottom view of the room service table of FIGURE 1;
FIGURE 3 is a perspective top view of the room service table with the drawer opened;
FIGURE 4 is a perspective view of the room service table with the table top partially lifted;
FIGURE 5 is a perspective view of the room service table with the table top fully lifted;
FIGURES 6A through 6D show a side view of the pivot and lifting mechanism in stages of movement, with one leg and the drawer omitted for clarity;
FIGURE 7 is a perspective view of two room service tables with their table tops lifted and the tables nesting together; and
FIGURE 8 is a side view of the nested tables of FIGURE 7.

### Detailed description of the embodiments

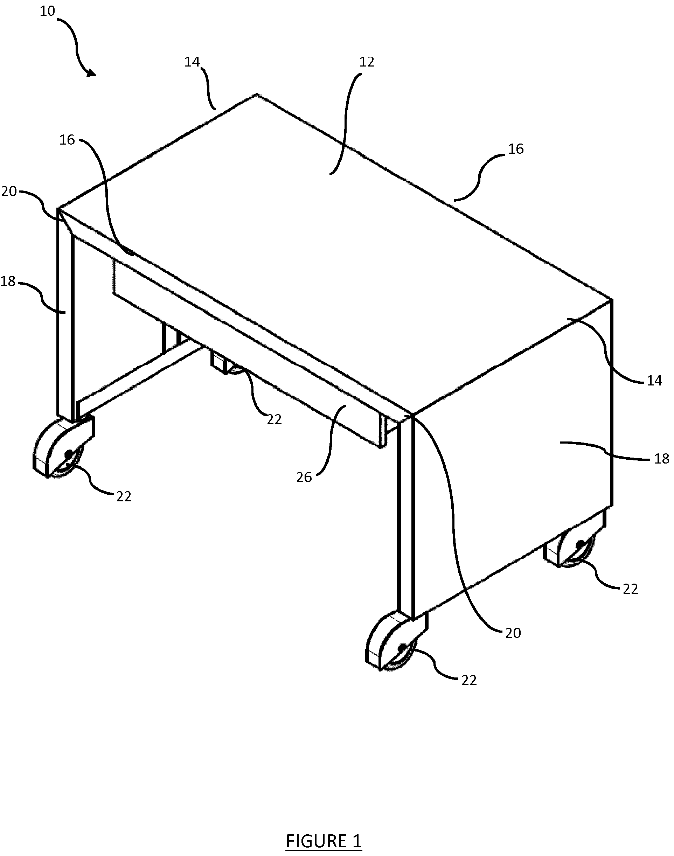

FIGURE 1 shows a room service table 10 having a table top 12, which, in use, is positioned generally horizontally. The table top 12 is generally rectangular having two opposing edges 14 and two longitudinal sides 16. Adjacent the two opposing edges 14 are generally upright legs 18. The legs 18 are panel-like in the embodiment shown and have the same width as the depth of the table top 12. The edges 14 of the table top meet with the top edges of the legs at a mitre joint 20 to provide a visually pleasing appearance. However, it will be appreciated that the table top 12 may come to rest on top of legs having a flat top, or any other suitable join may be provided.

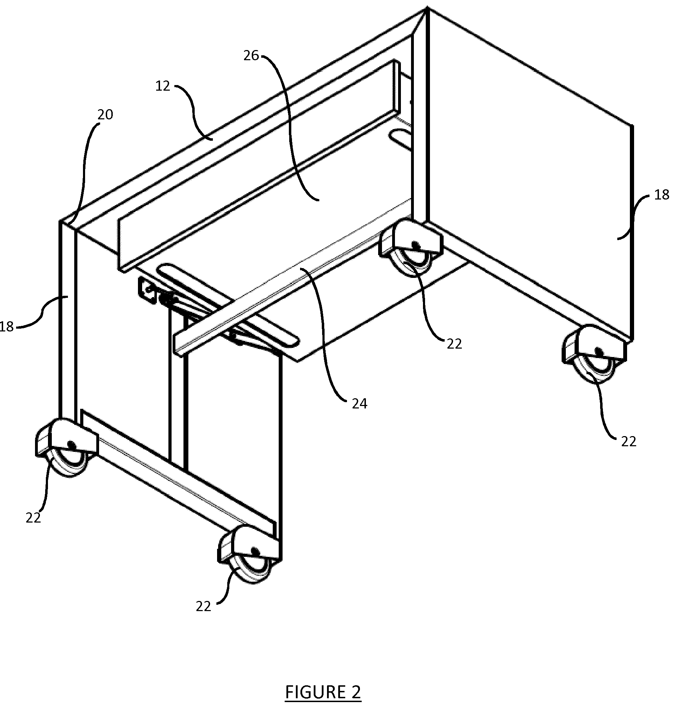

At the bottom of each leg 18 are two spaced apart wheels or casters 22, which allow the room service table to be easily pushed around a hotel to take food to a room for consumption by a guest. The table 10 is such that a guest can readily sit at the table to dine, as there is sufficient leg clearance provided, as shown in FIGURE 2. An internal frame member 24 may be provided to brace between the two legs 18.

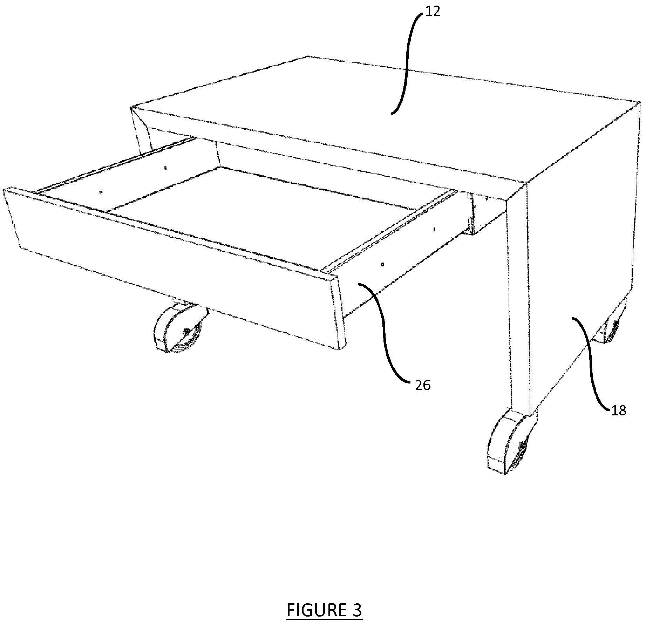

Positioned directly underneath the table top 12 is a drawer 26. The drawer 26 is rectangular and has a minimum depth in order to receive at least food servings for two people, for example two dinner plates. As shown in FIGURE 3, the drawer 26 can be slid outwardly to provide ready access to the food servings held inside. The food serving can then be placed on the table top surface for consumption.

The drawer 26 is insulated in order to keep the food servings warm for an extended period. According to the invention, the drawer functions as a warming oven by integrating a heating element within it. The heating element may be a fan forced electric element, for example.

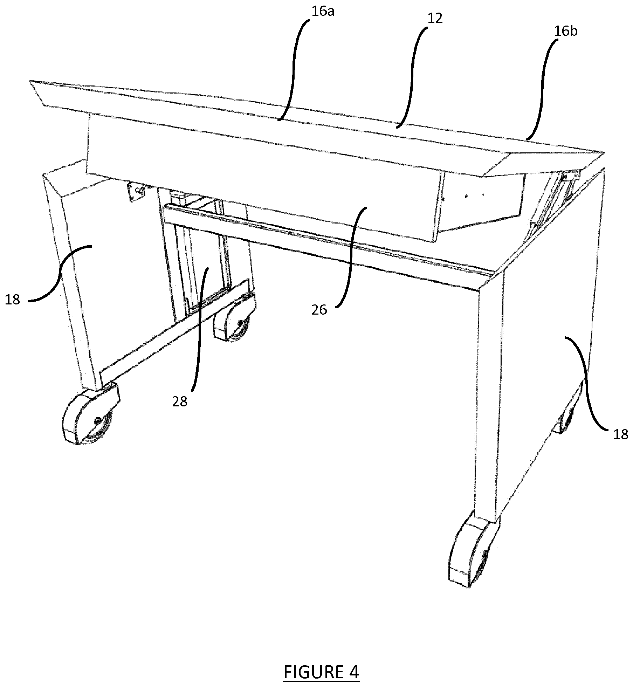

A battery pack 28 is held in a recess on the inside surface of one of the legs 18 (see FIGURE 4). The battery pack 28 is used to power the heating element. It can additionally provide a power point to enable other electrical equipment to be plugged in for use. One example being a toaster that can sit on the table top, allowing the hotel guest to cook their own toast ensuring the guest is provided with hot, crispy toast when they are ready to eat. The battery pack 28 may be removable to allow remote charging, or charging may occur whilst in position.

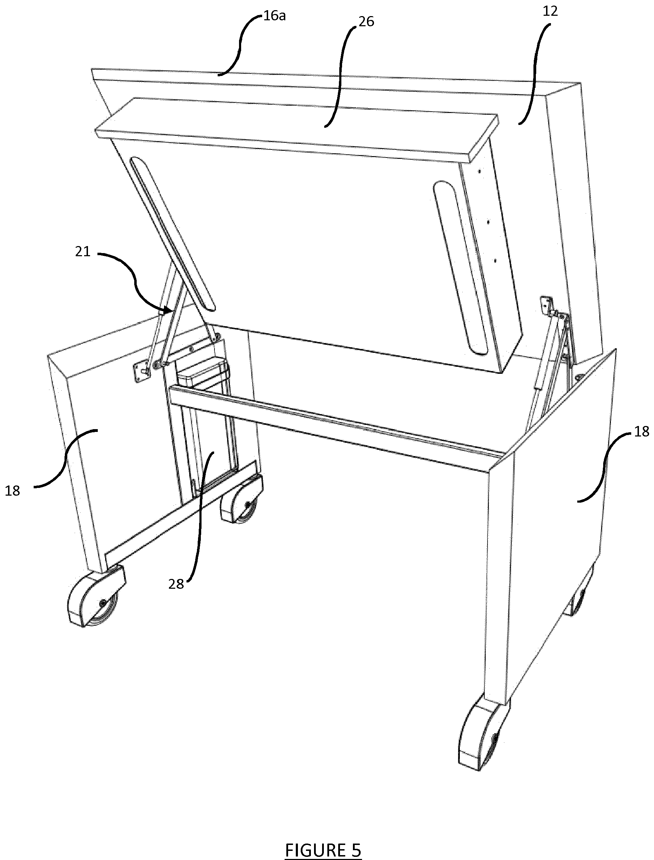

To enable ready storage of the room service table 10, the table top 12 is able to be lifted, as shown in FIGURE 4. The front side 16a, which is the side from which the drawer is accessible, tilts upwards with respect to the rear side 16b. The lifting mechanism (21) will be described further below, but in the fully tilted position, as shown in FIGURE 5, the table top 12 and underlying drawer 26 is held at an approximate angle of 50 to 70 degrees to horizontal. By tilting the front side 16a upwards, the drawer 26 remains closed.

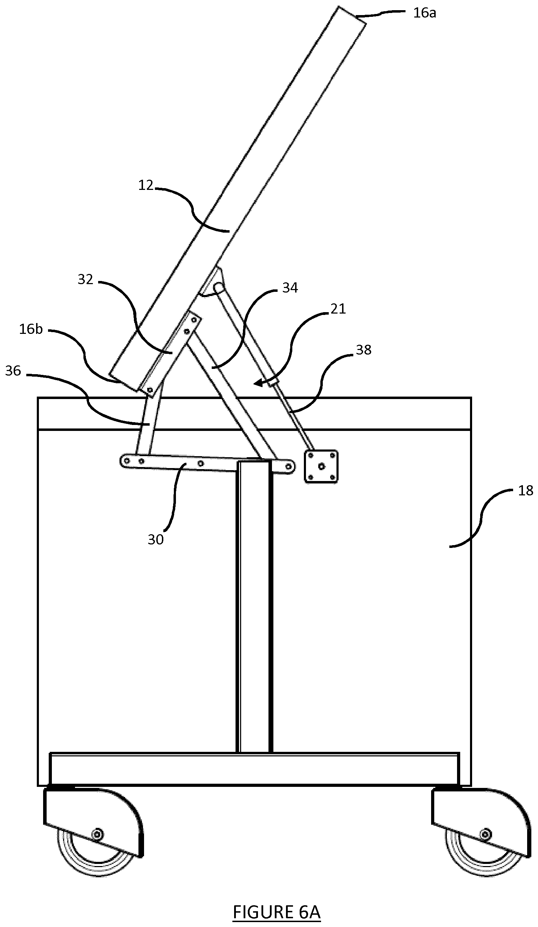

The lifting mechanism will now be described with reference to FIGURE 6A through FIGURE 6D, which show the progressive lowering of the table top 12. The drawer and one of the legs have been removed from these drawings to enable the lift mechanism to be clearly seen.

The lift mechanism (21) is an articulated quadrilateral, constructed from four arms. First arm 30 is attached to the inside of a leg 18 in a horizontal orientation. An opposing second arm 32 is fixed to the underside of the table top 12. The first arm 30 is longer than the second arm 32. A third arm 34 extends between the first and second arms 30, 32 towards their ends nearest the front side 16a. A fourth arm 36 extends between the first and second arms 30, 32 towards their ends nearest the rear side 16b. The third arm 34 is longer than the fourth arm 36. The third arm 34 is also longer than the first arm 30. The second arm 32 and the fourth arm 36 are generally similar lengths. Each of the corner connections between respective arms are pivotal allowing free rotation between arms. As shown in FIGURE 6A, in the upright position, fourth arm 36 sits at an angle where its top is tilted toward the front side 16a. The third arm 34 sits at an angle where its top is tilted towards the rear side 16b.

As shown in FIGURE 6A, the table top sits at approximately 60 degrees in the upright position and is held in place by a gas strut 38 that extends between the table top 12 and the leg 18 in front of the lift mechanism. The gas strut 38 is biased to the extended position to assist in lifting.

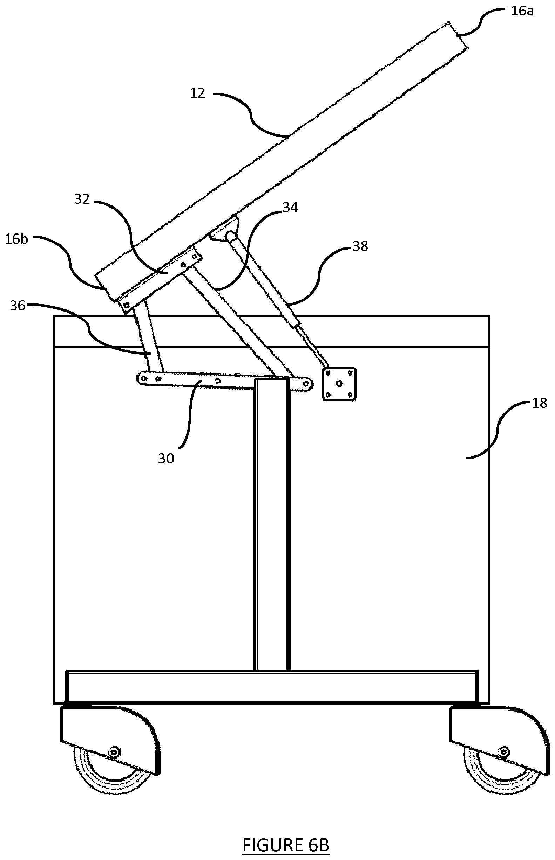

FIGURE 6B shows the table top 12 lowered slightly. This would be achieved by a user pushing downwardly on front edge 16a overcoming the bias of the gas strut 38. As the front edge 16a is lowered, the angle of the second arm 32 is also lowered. This forces rotation of third arm 34 towards the rear side 16b and raises rear side 16b, also pushing it rearwardly. This has the effect of rotating fourth arm 36 rearwardly also.

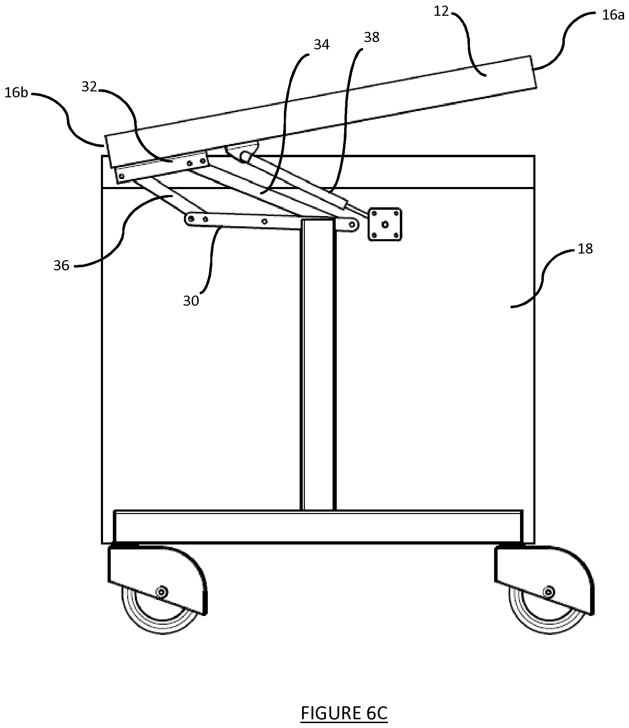

As the table top 12 is lowered further, as shown in FIGURE 6C, the third arm 34 and fourth arm 36 continue to rotate rearwardly lowering the second arm 32 and moving it further rearward. The gas strut 38 also pivots with respect to the leg 18 and table top 12 and lowers.

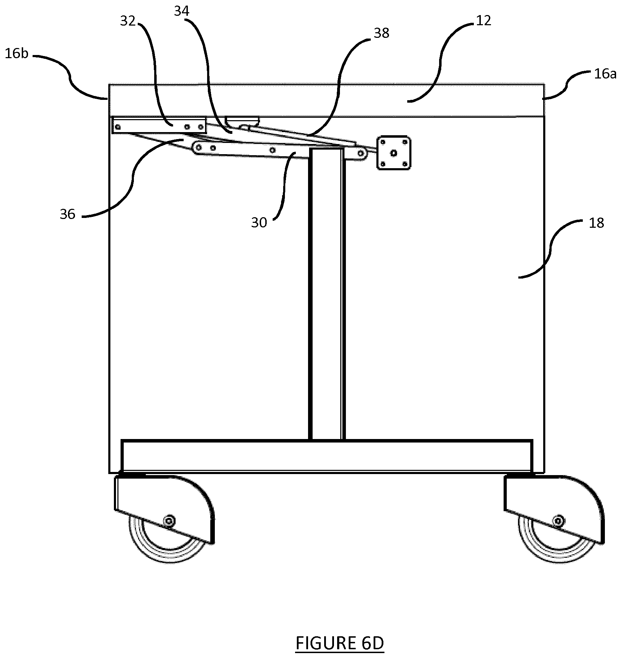

FIGURE 6D shows the table top 12 in the fully lowered position. The articulated quadrilateral mechanism is forced into a closed condition, with third arm 34 and fourth arm 36 lying at a small angle to horizontal. This lowered position aligns the rear side 16b with the rear side of the leg 18. Latching means (not shown) can be provided between the table top and the legs to lock the table top in the lowered position for use.

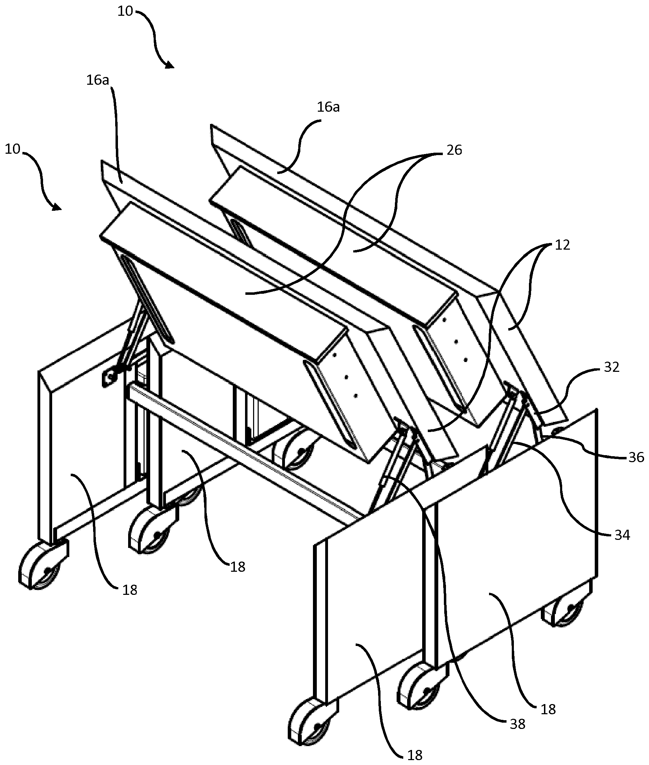

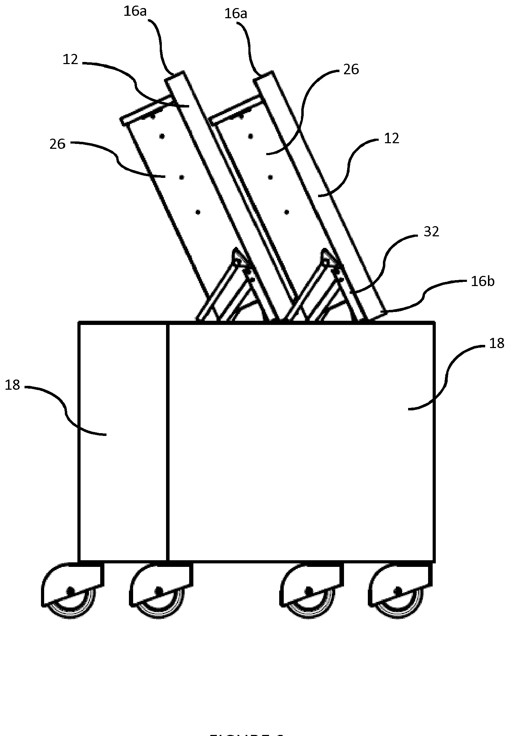

Turning back to FIGURE 6A, it can be seen that in the raised position, the rear side 16b of the table top 12 sits above the top of the legs. This gap provides clearance for multiple tables to be nested, as shown in FIGURE 7 and FIGURE 8. The nesting occurs by offsetting the legs of one table with respect to another. The tilted table tops and drawers sit against each other.

The present invention provides the advantage of a food warmer drawer integrated into a room service table that is able to be nested for storage without having to first remove the food warmer. This cuts down service times and handling, and reducing potential OHS&S issues with lifting the food warmers.

It will be understood that the invention disclosed and defined in this specification extends to all alternative combinations of two or more of the individual features mentioned or evident from the text or drawings. All of these different combinations constitute various alternative aspects of the invention, as defined in the appended claims.

## Claims

1. A room service table (10), including;
a table top (12) having two opposing edges (14);
at least two opposing legs (18) adjacent a respective opposing edge, for supporting the table top, the legs having wheels (22) for rolling the table along a surface;
a drawer (26) located underneath of the table top for receiving food for room service delivery, the drawer being an insulated drawer to act as a food warmer and having a heating element to ensure heat within the drawer is maintained;
wherein the table top is moveably connected to the opposing legs, and whereby the table top and drawer can be tilted upwards with respect to both of the opposing legs to allow nesting together of two or more like room service tables,
**characterized in that**
there is further provided a rechargeable battery pack held in a recess on an inside surface of one of the legs of the room service table, wherein the rechargeable battery pack is configured to power the heating element.

2. A room service table according to claim 1, wherein the top surface of the table top is planar.

3. A room service table according to claim 1 or 2, wherein there are two opposing legs, each being panels extending the depth of the table top.

4. A room service table according to claim 3, wherein the opposing legs have an exterior that is planar.

5. A room service table according to claim 4, wherein the table top and a leg meet at a mitre joint (20).

6. A room service table according to any one of the preceding claims, wherein the moveable connection (21) between the table top and the opposing legs is at least in part pivotal.

7. A room service table according to claim 6, wherein the moveable connection is also at least in part displaceable forward/rearward and/or up/down,

8. A room service table according to any one of the preceding claims, wherein the table top pivots between the two opposing legs, the rotation being in a direction perpendicular to an axis extending between the two opposing legs.

9. A room service table according to any one of the preceding claims, wherein there is a moveable connection (21) on both of the opposing edges, connecting the table top on both edges to a respective leg.

10. A room service table according to any one of the preceding claims, wherein the moveable connection (21) is a lift mechanism in the form of an articulated quadrilateral.

11. A room service table according to claim 10, wherein the articulated quadrilateral includes the pivotal connection of four arms (30, 32, 34, 36) of differing lengths, with one arm (30) fixed to the leg and an opposing arm (32) fixed to the table top.

12. A room service table according to any one of the preceding claims, wherein a gas strut (38) is utilised to assist with lifting of the table top to the tilted orientation.

13. A room service table according to claim 12, wherein latching means is provided between the table top and the legs to lock in the lowered orientation.

## Patentansprüche

1. Ein Zimmerservicetisch (10), enthaltend:
eine Tischplatte (12) mit zwei gegenüberliegenden Kanten (14);
mindestens zwei einer jeweiligen gegenüberliegenden Kante benachbart angeordnete, gegenüberliegende Beine (18) zum Stützen der Tischplatte, wobei die Beine Räder (22) zum Rollen des Tisches entlang einer Oberfläche aufweisen;
eine unterhalb der Tischplatte angeordnete Schublade (26) zur Aufnahme von Speisen für die Ausgabe beim Zimmerservice, wobei die Schublade eine isolierte Schublade ist, um als Speisenwärmer zu dienen, und ein Heizelement aufweist, um sicherzustellen, dass die Wärme in der Schublade aufrechterhalten wird;
wobei die Tischplatte beweglich mit den gegenüberliegenden Beinen verbunden ist und wobei die Tischplatte und die Schublade in Bezug auf die beiden gegenüberliegenden Beine nach oben gekippt werden können, um ein Ineinanderschachteln von zwei oder mehr ähnlichen Zimmerservicetischen zu ermöglichen,
**dadurch gekennzeichnet, dass**
ferner ein wiederaufladbarer Batteriesatz vorgesehen ist, der in einer Aussparung an einer Innenfläche eines der Beine des Zimmerservicetisches gehalten wird, wobei der wiederaufladbare Batteriesatz dazu eingerichtet ist, das Heizelement mit Energie zu versorgen.

2. Ein Zimmerservicetisch gemäß Anspruch 1, wobei die obere Fläche der Tischplatte eben ist.

3. Ein Zimmerservicetisch gemäß Anspruch 1 oder 2, wobei zwei gegenüberliegende Beine vorhanden sind, die jeweils Platten sind, die sich über die Tiefe der Tischplatte erstrecken.

4. Ein Zimmerservicetisch gemäß Anspruch 3, wobei die gegenüberliegenden Beine eine ebene Außenseite haben.

5. Ein Zimmerservicetisch gemäß Anspruch 4, wobei die Tischplatte und ein Bein in einer Gehrungsverbindung (20) aufeinandertreffen.

6. Ein Zimmerservicetisch gemäß einem der vorhergehenden Ansprüche, wobei die bewegliche Verbindung (21) zwischen der Tischplatte und den gegenüberliegenden Beinen zumindest teilweise schwenkbar ist.

7. Ein Zimmerservicetisch gemäß Anspruch 6, wobei die bewegliche Verbindung auch zumindest teilweise nach vorne/hinten und/oder nach oben/unten verschiebbar ist.

8. Ein Zimmerservicetisch gemäß einem der vorhergehenden Ansprüche, wobei die Tischplatte zwischen den beiden gegenüberliegenden Beinen schwenkbar ist, wobei die Drehung in einer Richtung senkrecht zu einer Achse erfolgt, die sich zwischen den beiden gegenüberliegenden Beinen erstreckt.

9. Ein Zimmerservicetisch gemäß einem der vorhergehenden Ansprüche, wobei an beiden der gegenüberliegenden Kanten eine bewegliche Verbindung (21) vorhanden ist, die die Tischplatte an beiden Kanten mit jeweils einem Bein verbindet.

10. Ein Zimmerservicetisch gemäß einem der vorhergehenden Ansprüche, wobei die bewegliche Verbindung (21) ein Hebemechanismus in Form eines gelenkigen Vierecks ist.

11. Ein Zimmerservicetisch gemäß Anspruch 10, wobei das gelenkige Viereck die schwenkbare Verbindung von vier Armen (30, 32, 34, 36) unterschiedlicher Länge enthält, wobei ein Arm (30) am Bein und ein gegenüberliegender Arm (32) an der Tischplatte befestigt ist.

12. Ein Zimmerservicetisch gemäß einem der vorhergehenden Ansprüche, wobei eine Gasdruckfeder (38) verwendet wird, um das Anheben der Tischplatte in die gekippte Ausrichtung zu unterstützen.

13. Ein Zimmerservicetisch gemäß Anspruch 12, wobei zwischen der Tischplatte und den Beinen eine Verriegelungseinrichtung bereitgestellt ist, um die abgesenkte Ausrichtung zu verriegeln.

## Revendications

1. Une table de service de chambre (10), comprenant :
un plateau de table (12) ayant deux bords opposés (14) ;
au moins deux pieds opposés (18) adjacents à un bord opposé respectif, pour supporter le plateau de table, les pieds ayant des roues (22) pour faire rouler la table le long d'une surface ;
un tiroir (26) situé sous le plateau de la table pour recevoir les aliments pour la livraison du service de chambre, le tiroir étant un tiroir isolé pour agir comme un réchauffeur d'aliments et ayant un élément chauffant pour assurer que la chaleur dans le tiroir est maintenue ;
dans lequel le plateau de table est relié de manière mobile aux pieds opposés, et dans lequel le plateau de table et le tiroir peuvent être inclinés vers le haut par rapport aux deux pieds opposés pour permettre l'emboîtement de deux ou plusieurs tables de service de chambre similaires,
**caractérisé en ce que**
il est en outre fourni un bloc de batterie rechargeable maintenu dans un évidement sur une surface intérieure de l'un des pieds de la table de service de chambre, dans lequel le bloc de batterie rechargeable est configuré pour alimenter l'élément chauffant.

2. Table de service de chambre selon la revendication 1, dans laquelle la surface supérieure du plateau de table est planaire.

3. Table de service de chambre selon la revendication 1 ou 2, dans laquelle il y a deux pieds opposés, chacun étant des panneaux s'étendant sur la profondeur du plateau de la table.

4. Table de service selon la revendication 3, dans laquelle les pieds opposés ont un extérieur qui est planaire.

5. Table de service selon la revendication 4, dans laquelle le plateau de table et un pied se rencontrent au niveau d'un joint à onglet (20).

6. Table de service de chambre selon l'une quelconque des revendications précédentes, dans laquelle la liaison mobile (21) entre le plateau de table et les pieds opposés est au moins en partie pivotante.

7. Table de service de chambre selon la revendication 6, dans laquelle la liaison mobile est également au moins en partie déplaçable vers l'avant/arrière et/ou vers le haut/bas.

8. Table de service de chambre selon l'une quelconque des revendications précédentes, dans laquelle le plateau pivote entre les deux pieds opposés, la rotation se faisant dans une direction perpendiculaire à un axe s'étendant entre les deux pieds opposés.

9. Table de service de chambre selon l'une quelconque des revendications précédentes, dans laquelle il existe une connexion mobile (21) sur les deux bords opposés, reliant le plateau de la table sur les deux bords à un pied respectif.

10. Table de service de chambre selon l'une quelconque des revendications précédentes, dans laquelle la connexion mobile (21) est un mécanisme de levage sous la forme d'un quadrilatère articulé.

11. Table de service de chambre selon la revendication 10, dans laquelle le quadrilatère articulé comprend la connexion pivotante de quatre bras (30, 32, 34, 36) de longueurs différentes, avec un bras (30) fixé au pied et un bras opposé (32) fixé au plateau de table.

12. Table de service de chambre selon l'une quelconque des revendications précédentes, dans laquelle une jambe de force à gaz (38) est utilisée pour aider à soulever le plateau de table dans l'orientation inclinée.

13. Table de service de chambre selon la revendication 12, dans laquelle des moyens de verrouillage sont fournis entre le plateau de table et les pieds pour verrouiller l'orientation abaissée.
